# FASCICULE DE BREVET EUROPEEN

(11) **EP 4 055 261 B1**
(45) Date de publication et mention de la délivrance du brevet: **20.03.2024**
(21) Numéro de dépôt: 20842007.5
(22) Date de dépôt: 08.12.2020
(51) Int. Cl.: F02K 3/06, F02C 7/14, F28F 13/12, F02C 7/18, F28D 21/00

(54) **ECHANGEUR DE CHALEUR COMPORTANT UNE PAROI INTER-AUBES POURVUE DE GÉNÉRATEURS DE TURBULENCE CREUX**
WÄRMETAUSCHER, DER EINE MIT HOHLEN TURBULENZGENERATOREN VERSEHENE ZWISCHENWAND UMFASST
HEAT EXCHANGER COMPRISING AN INTER-VANE WALL PROVIDED WITH HOLLOW TURBULENCE GENERATORS

(30) Priorité: 12.12.2019 FR 1914287
(43) Date de publication de la demande: 14.09.2022
(73) Titulaire: SAFRAN AIRCRAFT ENGINES, 75015 Paris (FR)
(72) Inventeur: CHASSAGNE, Amélie Argie Antoinette, 77550 MOISSY-CRAMAYEL (FR); BRUNET, Antoine Robert Alain, 77550 MOISSY-CRAMAYEL (FR); ZACCARDI, Cédric, 77550 MOISSY-CRAMAYEL (FR)
(74) Mandataire: Brevalex
(86) Numéro de dépôt international: PCT/FR2020/052336
(87) Numéro de publication internationale: WO 2021/116592

(56) Documents cités:
- EP-A1- 3 290 846
- WO-A1-2021/116591
- US-A1- 2012 114 468
- US-A1- 2019 360 398

## Description

### DOMAINE TECHNIQUE

L'invention concerne une turbomachine telle qu'un turboréacteur, traversé par au moins une veine de flux gazeux, cette veine étant délimitée par une paroi interne de ce moteur.

### ÉTAT DE LA TECHNIQUE ANTÉRIEURE

Dans un tel moteur, l'air est admis dans une manche d'entrée pour traverser une soufflante comportant une série de pales rotatives avant de se scinder en un flux primaire central et un flux secondaire entourant le flux primaire.

Le flux primaire est compressé par des compresseurs avant d'atteindre une chambre de combustion, après quoi il se détend en traversant des turbines, avant d'être évacué en générant une poussée. Le flux secondaire est quant à lui propulsé directement par la soufflante pour générer une poussée complémentaire.

Le flux primaire et le flux secondaire circulent respectivement dans une veine primaire et une veine secondaires séparées l'une de l'autre par un espace dit inter-veines.

La veine primaire est délimitée extérieurement par une paroi interne de l'espace inter-veines, la veine secondaire est délimitée intérieurement par une paroi externe de l'espace inter-veines et elle est délimitée extérieurement par une paroi interne d'une nacelle entourant le turboréacteur.

Dans un tel moteur, différents composants, de type paliers, roulements, engrenages et autres, sont lubrifiés par de l'huile qui circule dans un circuit hydraulique intégrant un échangeur thermique, sous forme d'un radiateur de refroidissement, assurant que cette huile reste à une température adaptée en toutes circonstances. Un tel échangeur est usuellement désigné par l'acronyme ACOC signifiant "Air Cooled Oil Cooler", c'est-à-dire refroidi par air et refroidissant l'huile.

Cet échangeur est fixé à une paroi du réacteur, et il dépasse de cette paroi pour être traversé par une portion du flux qui longe cette paroi en circulant dans le réacteur, de manière à refroidir l'huile du circuit hydraulique.

Un tel échangeur constitue ainsi une forme en relief qui constitue de fait un obstacle introduisant des pertes de charge dans l'écoulement du flux dans le moteur.

Le document EP 3 290846 divulgue un ensemble pour une turbomachine selon l'état de l'art qui comporte un carter de soufflante comprenant une portion avant entourant la soufflante et une portion arrière portant une virole de refroidissement. Cette virole de refroidissement porte des radiateurs incluant chacun des conduits de fluide à refroidir et une surface de refroidissement comportant des ailettes longitudinales. Des générateurs de turbulences sont positionnés en amont des ailettes pour favoriser l'échange thermique le long de ces ailettes.

Le but de l'invention est de proposer un agencement d'intégration d'un tel échangeur qui limite les pertes de charges qu'il introduit dans l'écoulement du flux traversant ce réacteur.

### EXPOSÉ DE L'INVENTION

A cet effet, l'invention a pour objet un ensemble pour une turbomachine selon la revendication 1.

L'invention permet ainsi de se dispenser des ailettes habituellement prévues dans un tel échangeur de chaleur, pour obtenir une efficacité d'échange thermique optimale tout en réduisant la perte de charge introduite dans le flux secondaire par la présence de l'échangeur.

L'invention concerne également un ensemble ainsi défini, dans lequel au moins une plateforme inter-aubes comporte plusieurs générateurs de turbulences répartis selon au moins une direction perpendiculaire à la direction longitudinale.

L'invention concerne également un ensemble ainsi défini, comportant au moins deux générateurs de turbulences contigus ayant des formes et/ou des dimensions différentes.

L'invention concerne également un ensemble ainsi défini, comportant au moins un générateur de turbulences qui dépasse de la face externe.

L'invention concerne également un ensemble ainsi défini, comportant au moins un générateur de turbulences ayant une forme creuse par rapport à la face externe.

L'invention concerne également un ensemble ainsi défini, comportant au moins un générateur de turbulences mobile entre un état désactivé dans lequel il affleure avec la face externe pour ne pas générer de turbulences, et un état activé dans lequel il forme un relief par rapport à la face externe pour générer des turbulences.

L'invention concerne également un ensemble ainsi défini, intégrant un système de pilotage de l'état activé ou désactivé des générateurs de turbulences.

L'invention a également pour objet une turbomachine comportant un ensemble ainsi défini.

### BRÈVE DESCRIPTION DES DESSINS

La Figure 1 est une vue en coupe longitudinale d'un turboréacteur selon l'invention ;
la Figure 2 est une vue en coupe longitudinale locale du turboréacteur selon l'invention au niveau d'un échangeur de chaleur ;
la Figure 3 est une vue radiale à plat locale du turboréacteur selon l'invention montrant deux échangeurs thermiques montés en aval du redresseur de fan ;
la Figure 4 est une vue en coupe longitudinale d'une forme de générateur de turbulences creux ;
la Figure 5 est une vue schématique en coupe d'un profil montrant plusieurs exemples de formes de générateurs de turbulences ;
la Figure 6 est une vue en perspective montrant un redresseur avec son échangeur thermique ;
la Figure 7 est une vue en perspective montrant localement un échangeur selon l'invention monté en aval d'aubes directrices ;
la Figure 8 est une vue schématique en coupe d'un générateur de turbulences à géométrie variable à l'état activé ;
la Figure 9 est une vue schématique en coupe d'un générateur de turbulences à géométrie variable à l'état désactivé.
La Figure 10 est une vue schématique en coupe d'un générateur de turbulences à géométrie variable à l'état partiellement activé.

### EXPOSÉ DÉTAILLÉ DE L'INVENTION

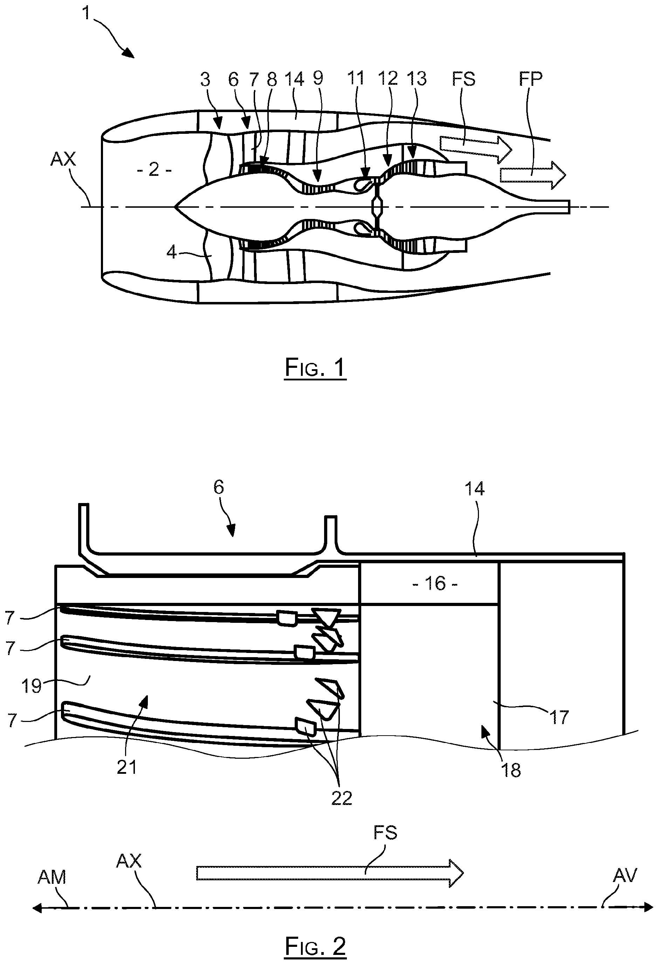

Sur la figure 1, un moteur 1 comporte une manche d'entrée 2 par laquelle l'air est admis pour traverser une soufflante 3 comportant une série de pales rotatives 4 suivie d'un redresseur 6 formé d'aubes directrices 7 avant de se scinder en un flux primaire central FP et un flux d'air secondaire FS entourant le flux primaire.

Le flux primaire FP est comprimé par des compresseurs basse pression 8 et haute pression 9 avant d'atteindre une chambre de combustion 11, après quoi il se détend en traversant une turbine haute pression 12 et une turbine basse pression 13, avant d'être évacué en générant une poussée auxiliaire. Le flux secondaire FS est quant à lui propulsé directement par la soufflante pour générer une poussée principale.

Chaque turbine 12, 13 comporte des séries d'aubes orientées radialement et régulièrement espacées autour d'un axe longitudinal AX, un carter externe 14 entourant l'ensemble du moteur.

Le moteur 1 intègre un circuit de circulation de l'huile de lubrification et/ou le refroidissement de ses composants, tels que les paliers portant ses éléments rotatifs ou des organes de transmission que ce moteur intègre. Le refroidissement de cette huile est assuré par le flux secondaire qui est frais, au moyen d'un échangeur thermique.

Cet échangeur, repéré par 16 sur la figure 2, est porté par une virole interne du carter externe 14 sensiblement en aval des aubes directrices 7, et il comporte une paroi d'échange thermique 17 ayant une face d'échange thermique 18, radialement interne, qui est baignée par le flux secondaire FS pour être refroidie par celui-ci. Cette face d'échange 18 est dépourvue de tout relief pour ne pas perturber l'écoulement de flux secondaire.

Cet échangeur 16 comporte des canalisations internes non représentées dans lesquelles circule l'huile à refroidir, et qui sont thermiquement liées à la paroi 17 pour refroidir l'huile circulant dans ces canalisations.

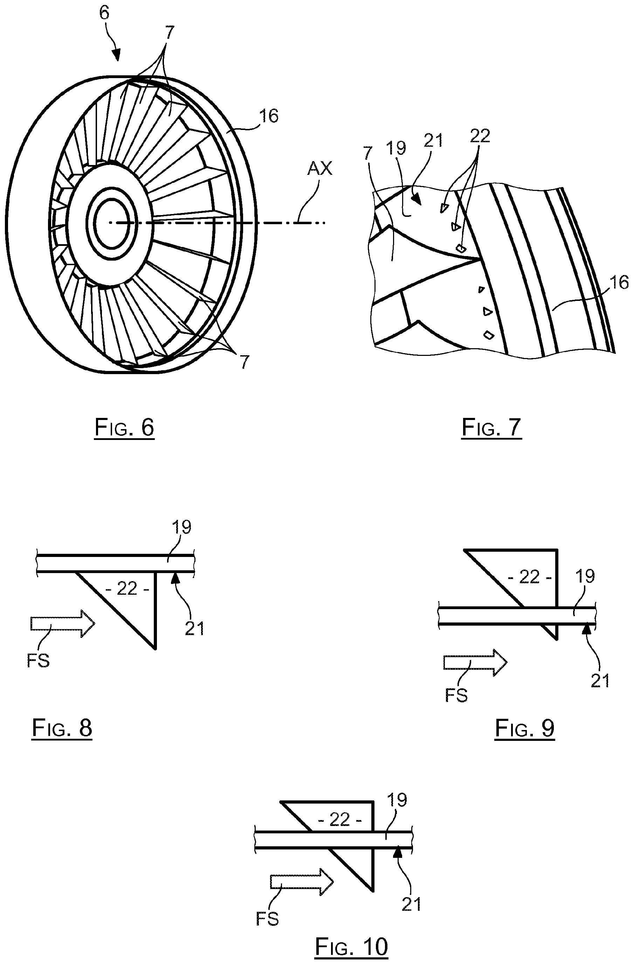

Comme visible sur les figures 2 et 7, les aubes directrices 7 du redresseur 6 s'étendent radialement par rapport à l'axe longitudinal AX, et une plateforme inter-aubes 19 s'étend entre les extrémités radialement externes de chaque paire d'aubes directrices 7 circonférentiellement consécutives. Chaque plateforme inter-aubes 19 comporte ainsi une face 21, dite externe, qui est tournée vers l'axe AX, qui est longée par le flux d'air circulant dans le turboréacteur.

Chaque plateforme inter-aubes 19 est par exemple le prolongement de l'une des deux aubes entre lesquelles elle s'étend en étant rigidement solidaire de celle-ci pour former avec elle un tout monobloc.

La face d'échange thermique 18 de l'échangeur 16 est située dans le prolongement, vers l'aval AV par rapport au sens de circulation du flux FS, d'une ou plusieurs faces externes de plateformes inter-aubes 19. Selon l'invention, au moins une face externe 21 située dans le prolongement de l'échangeur 16 est pourvue de générateurs de turbulences 22. La face externe 21 de cette plateforme 19 permet ainsi d'introduire localement des turbulences dans l'écoulement du flux secondaire FS qui la longe, pour accroître l'efficacité de l'échange thermique entre ce flux primaire et la paroi d'échange 17 située immédiatement à son aval.

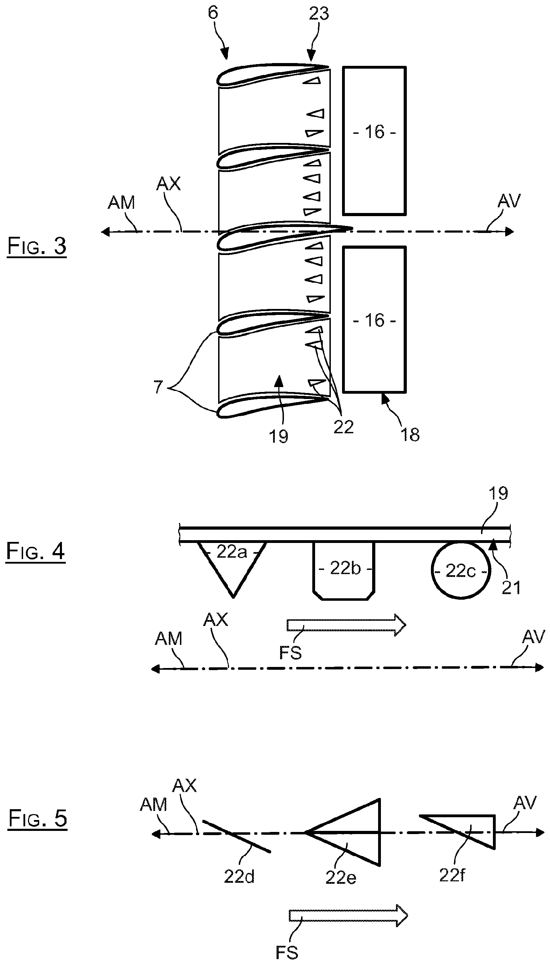

Comme visible sur la figure 3, le moteur 1 peut comporter plusieurs échangeurs 16 placés à la circonférence interne du carter 14, en étant circonférentiellement espacés les uns des autres et situés longitudinalement immédiatement en aval du redresseur 6.

Dans les exemples des figures, les générateurs de turbulences 22 sont des formes en relief dépassant de la face externe 21, pour dévier localement le flux secondaire afin d'y introduire des turbulences. Le flux longeant alors la face d'échange 18 située en aval de ces générateurs de turbulences est de fait turbulent, ce qui augmente significativement ses échanges thermiques avec la face 18, pour refroidir l'huile de l'échangeur 16 plus efficacement et en perturbant de façon minimale l'écoulement global du flux secondaire FS.

Les générateurs de turbulence 22 ont avantageusement des dimensions différentes, les uns par rapport aux autres, pour maximiser les turbulences qu'ils introduisent. Avantageusement plusieurs générateurs de turbulences 22 sont agencés les uns derrière les autres selon la direction longitudinale.

Les générateurs de turbulence 22 peuvent également avoir différentes formes, comme illustré schématiquement sur les figures 4 et 5. Il peut par exemple s'agir de formes d'ailettes dépassant de la face 21 en étant inclinées par rapport à la direction AX comme illustré schématiquement par l'ailette 22d de la figure 5. Une telle ailette peut avoir en vue latérale un contour triangulaire comme l'ailette 22a, rectangulaire comme l'ailette 22b, voire circulaire comme l'ailette 22c, ces exemples étant représentés schématiquement sur la figure 4.

Ces générateurs peuvent aussi avoir une forme volumique comme une forme de pyramide à base de triangle isocèle dans le cas du générateur 22e ou encore une forme de pyramide à base de triangle rectangle comme dans le cas du générateur 22f qui sont représentés schématiquement sur la figure 5. D'autres formes, plus ou moins complexes que celles représentées sur les figures 4 et 5 peuvent également être envisagées.

D'une manière générale, les générateurs de turbulences 22 ont une hauteur significativement inférieure à la hauteur de veine selon la direction radiale. Cette hauteur est la différence de rayon entre la face interne du carter 14, qui délimite extérieurement le flux secondaire, et la face externe d'un carter délimitant intérieurement le flux secondaire. La longueur de ces générateurs de turbulences est quant à elle comprise entre un dixième et dix fois cette hauteur.

L'inclinaison du bord d'attaque d'un générateur de turbulences par rapport à la face 21 est avantageusement comprise entre 10° et 90°, et l'inclinaison du bord de fuite ou de sa face aval par rapport à la face 21 est avantageusement comprise entre 90° et 60°. Lorsqu'un tel générateur de turbulences est une ailette, son épaisseur est avantageusement inférieure au dixième de sa longueur selon la direction AX.

D'une manière générale, différentes formes peuvent être prévues, de la plus simple à la plus complexe, et les formes ainsi que les dimensions de ces générateurs 22 sont conditionnées par le niveau d'échange thermique attendu et la perte de charge acceptable.

Ces générateurs peuvent être répartis selon la direction circonférentielle, c'est-à-dire selon la direction perpendiculaire à l'axe AX, et selon la direction longitudinale AX de façon uniforme ou hétérogène. Avantageusement, les différents générateurs de turbulences 22 ont des formes différentes et des dimensions différentes, de façon à accroître la turbulence qu'ils génèrent.

Dans l'exemple des figures les générateurs de turbulences 22, 22a-f ont des formes en relief dépassant de la face 21, mais on peut, alternativement ou complémentairement prévoir des générateurs ayant des formes creuses formées dans la face 21, pour, d'une façon analogue générer localement des turbulences dans l'écoulement de fluide longeant la face 21.

Afin d'optimiser l'échange thermique en fonction des conditions de fonctionnement du moteur, un système de pilotage des générateurs 22, pouvant être actif ou passif, est avantageusement prévu pour les sortir ou les rentrer. Les générateurs de turbulences 22 sont alors escamotables pour pouvoir être activés et désactivés au besoin, ce qui permet de sensiblement annuler la perte de charge lorsque le refroidissement requis est faible ou nul, par exemple par temps froid.

En pratique, le système est ainsi activé pour sortir les générateurs de turbulences 22 afin qu'ils dépassent de la face 21, comme sur la figure 8 afin d'obtenir un refroidissement important, au détriment d'une perte de charge relativement importante. Ce système est désactivé pour escamoter les générateurs 22 comme sur la figure 9 afin d'obtenir un refroidissement faible ou nul, mais une perte de charge inexistante.

Comme illustré sur la figure 10, le système de contrôle peut également être agencé pour placer les générateurs de turbulences dans un état partiellement sorti, afin d'obtenir un refroidissement modéré, accompagné d'une perte de charge faible.

Dans ce cadre, le système de pilotage est alors configuré pour s'activer afin de placer les perturbateurs dans un état sorti en cas de panne ou d'anomalie de fonctionnement du moteur, de manière à garantir alors un refroidissement maximal.

## Revendications

1. Ensemble pour une turbomachine traversée par un flux d'air (FS), comprenant un redresseur (6) comprenant des aubes directrices (7) s'étendant radialement par rapport à un axe longitudinal (AX), au moins une plateforme inter-aubes (19) s'étendant entre les extrémités radialement externes de deux aubes directrices (7) circonférentiellement consécutives, chaque plateforme inter-aubes (19) comportant une face externe (21) tournée vers l'axe (AX), un échangeur de chaleur (16) situé en aval (AV) du redresseur (6) par rapport au sens de circulation du flux d'air (FS), cet échangeur de chaleur (16) comportant une face d'échange thermique (18) dépourvue de relief et s'étendant dans le prolongement aval (AV) d'une plateforme inter-aubes (19), et dans lequel au moins une plateforme inter-aubes (19) située dans le prolongement amont (AM) de la face d'échange thermique (18) de l'échangeur de chaleur (16) est pourvue d'au moins un générateur de turbulences (22) à sa face externe (21).

2. Ensemble selon la revendication 1 ou 2, dans lequel au moins une plateforme inter-aubes (19) comporte plusieurs générateurs de turbulences (22) répartis selon au moins une direction perpendiculaire à la direction longitudinale (AX).

3. Ensemble selon la revendication précédente, comportant au moins deux générateurs de turbulences (22) contigus ayant des formes et/ou des dimensions différentes.

4. Ensemble selon l'une des revendications précédentes, comportant au moins un générateur de turbulences (22) qui dépasse de la face externe (21).

5. Ensemble selon l'une des revendications précédentes, comportant au moins un générateur de turbulences (22) ayant une forme creuse par rapport à la face externe (21).

6. Ensemble selon l'une des revendications précédentes, comportant au moins un générateur de turbulences (22) mobile entre un état désactivé dans lequel il affleure à la face externe (21) pour ne pas générer de turbulences, et un état activé dans lequel il dépasse de la face externe (21) pour générer des turbulences.

7. Ensemble selon la revendication précédente, intégrant un système de pilotage de l'état activé ou désactivé des générateurs de turbulences (22).

8. Turbomachine (1) comportant un ensemble selon l'une des revendications précédentes.

## Patentansprüche

1. Anordnung für eine Turbomaschine, die von einem Luftstrom (FS) durchströmt wird, umfassend einen Gleichrichter (6), der Leitschaufeln (7) umfasst, die sich radial in Bezug auf eine Längsachse (AX) erstrecken, mindestens eine Zwischenschaufelplattform (19), die sich zwischen den radial äußeren Enden von zwei in Umfangsrichtung aufeinanderfolgenden Leitschaufeln (7) erstreckt, wobei jede Zwischenschaufelplattform (19) eine der Achse (AX) zugewandte Außenfläche (21) aufweist, einen Wärmetauscher (16), der in Bezug auf die Zirkulationsrichtung des Luftstroms (FS) stromabwärts (AV) des Gleichrichters (6) liegt, wobei dieser Wärmetauscher (16) eine Wärmeaustauschfläche (18) umfasst, die kein Relief aufweist und sich in der stromabwärtigen (AV) Verlängerung einer Zwischenschaufelplattform (19) erstreckt, und wobei mindestens eine Zwischenschaufelplattform (19), die in der stromaufwärtigen (AM) Verlängerung der Wärmeaustauschfläche (18) des Wärmetauschers (16) liegt, an ihrer Außenfläche (21) mit mindestens einem Turbulenzgenerator (22) versehen ist.

2. Anordnung nach Anspruch 1, wobei mindestens eine Zwischenschaufelplattform (19) mehrere Turbulenzgeneratoren (22) umfasst, die in mindestens einer Richtung senkrecht zur Längsrichtung (AX) verteilt sind.

3. Anordnung nach dem vorstehenden Anspruch, die mindestens zwei aneinandergrenzende Turbulenzgeneratoren (22) umfasst, die unterschiedliche Formen und/oder Abmessungen aufweisen.

4. Anordnung nach einem der vorstehenden Ansprüche, die mindestens einen Turbulenzgenerator (22) umfasst, der über die Außenfläche (21) hinausragt.

5. Anordnung nach einem der vorstehenden Ansprüche, die mindestens einen Turbulenzgenerator (22) umfasst, der in Bezug auf die Außenfläche (21) eine hohle Form aufweist.

6. Anordnung nach einem der vorstehenden Ansprüche, die mindestens einen Turbulenzgenerator (22) umfasst, der zwischen einem deaktivierten Zustand, in dem er mit der Außenfläche (21) fluchtet, um keine Turbulenzen zu erzeugen, und einem aktivierten Zustand, in dem er über die Außenfläche (21) hinausragt, um Turbulenzen zu erzeugen, beweglich ist.

7. Anordnung nach dem vorstehenden Anspruch, in der ein System zum Steuern des aktivierten oder deaktivierten Zustands der Turbulenzgeneratoren (22) integriert ist.

8. Turbomaschine (1), die eine Anordnung nach einem der vorstehenden Ansprüche umfasst.

## Claims

1. Assembly for a turbomachine through which an air flow (FS) passes, comprising a stator (6) comprising guide vanes (7) extending radially in relation to a longitudinal axis (AX), at least one inter-vane platform (19) extending between the radially outer ends of two circumferentially consecutive guide vanes (7), each inter-vane platform (19) including an outer surface (21) that faces the axis (AX), a heat exchanger (16) located downstream (AV) of the stator (6) in relation to the direction of circulation of the air flow (FS), this heat exchanger (16) including a heat exchange surface (18) devoid of any relief and extending in the downstream extension (AV) of an inter-vane platform (19), and wherein at least one inter-vane platform (19) located in the upstream extension (AM) of the heat exchange surface (18) of the heat exchanger (16) is provided with at least one turbulence generator (22) on its outer surface (21).

2. Assembly according to claim 1, wherein at least one inter-vane platform (19) includes a plurality of turbulence generators (22) distributed in at least one direction perpendicular to the longitudinal direction (AX).

3. Assembly according to the preceding claim, including at least two adjacent turbulence generators (22) having different shapes and/or dimensions.

4. Assembly according to one of the preceding claims, including at least one turbulence generator (22) that protrudes from the outer surface (21).

5. Assembly according to one of the preceding claims, including at least one turbulence generator (22) having a hollow shape in relation to the outer surface (21).

6. Assembly according to one of the preceding claims, including at least one turbulence generator (22) movable between a deactivated state wherein it is flush with the outer surface (21) so as not to generate turbulences, and an activated state wherein it protrudes from the outer surface (21) to generate turbulences.

7. Assembly according to the preceding claim, integrating a system for controlling the activated or deactivated state of the turbulence generators (22).

8. Turbomachine (1) including an assembly according to one of the preceding claims.
